(19)

Europäisches Patentamt

European Patent Office

Office européen des brevets

(11) **EP 3 252 383 A1**

(12) **EUROPEAN PATENT APPLICATION**

(43) Date of publication:
06.12.2017 Bulletin 2017/49

(21) Application number: **16172092.5**

(22) Date of filing: **31.05.2016**

(51) Int Cl.:
*F24D 3/08* (2006.01)          *F24D 3/18* (2006.01)
*F24D 19/10* (2006.01)          *G05D 23/19* (2006.01)
*G06Q 10/06* (2012.01)          *G06Q 50/06* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **DAIKIN INDUSTRIES, LIMITED**
  **Osaka-shi**
  **Osaka 530 (JP)**

• **Daikin Europe N.V.**
  **8400 Oostende (BE)**

(72) Inventors:
• **CHIKAMI, Hideo**
  **8400 Oostende (BE)**
• **VANSTEENKISTE, Wim**
  **8400 Oostende (BE)**

(74) Representative: **Global IP Europe
Patentanwaltskanzlei
Pfarrstraße 14
80538 München (DE)**

(54) **APPARATUS FOR SPACE HEATING AND WARM WATER SUPPLY**

(57)     An apparatus (100) configured to be connected to a space heating unit (200) and a water supply unit (300) with a water tank (310) so as to form a space heating circuit (250) and a water supply circuit (350) in which a heating medium is supplied to the space heating unit (200) and the water supply unit (300), respectively. The apparatus comprises a heat pump unit (20) and a boiler unit (30) configured to heat the heating medium, an operation mode section (92) configured to switch an operation mode of the apparatus between a space heating mode and a water supply mode by controlling a circuit switching means (40), and a heat source control section (94) configured to stop the heat pump unit (20) and the boiler unit (30) upon changes in the operation mode of the apparatus while the boiler unit (30) is in operation.

[FIG.5]

Initial Operation of the Heat Source Control Means Executed
When the Operation Mode of the Apparatus is Switched

S11  Heat Pump Unit Solely Operated ?  — No
Yes

S12  Stop Both of the Heat Pump Unit and th Boiler Unit

S13  Predetermined Time Elapsed?  — No
Yes

S14  Keep the Heat Pump Unit Operating

S15  Heat Source Determination

EP 3 252 383 A1

**Description**

**Field of the invention**

The invention relates to an apparatus for space heating and warm water supply, specifically an apparatus for space heating and warm water supply having a heat pump unit and a boiler unit as heat sources.

**Background**

Such an apparatus is known from EP 2 463 591 A1. In this apparatus, a heat pump unit and a boiler unit are used as heat sources for space heating, i.e. during a space heating mode of the apparatus. Only the boiler unit is used as a heat source for water supply, i.e. during a water supply mode of the apparatus.
Although the apparatus above improves energy efficiency in space heating by using the heat pump unit and the boiler unit properly, the energy efficiency of water supply remains the same as an apparatus having a boiler unit as a heat source. It is possible to improve efficiency in water supply by using the heat pump unit and the boiler unit for water supply.
Incidentally, when the heat pump unit and the boiler unit are used as the heat source for space heating and water supply, a following problem can arise.
The heat pump unit is provided with a heat exchange means where the heating medium and a refrigerant exchange heat with each other. The heat pump unit is operable when the temperature of the refrigerant flowing into the heat exchange means is within a predetermined range.
During space heating or water supply by the boiler unit, the heating medium can be heated to a target temperature outside the predetermined range of the temperature of the refrigerant. It should be avoided to supply such a hot heating medium to the heat pump unit during any operation by the heat pump unit. When the operation mode of the apparatus is switched between the space heating mode and water supply mode, there is a risk that a cold heating medium is firstly supplied to the heat pump and then suddenly a hot heating medium is supplied thereto, since the cold heating medium has stagnated in a non-used circuit. Therefore, the temperature of the heating medium at the heat pump might change for a short time period during which the heating medium starts circulating in the circuit in operation and the entire heating medium reaches to a stable temperature.
It is the object of the present invention to provide an apparatus for space heating and water supply having a heat pump unit and a boiler unit as heat sources and having high efficiency of the apparatus in both of space heating and water supply without increasing the risk of damage of the heat pump unit.

**Summary**

A first aspect of the present invention provides an apparatus configured to be connected to a space heating unit and a water supply unit with a water tank so as to form a space heating circuit and a water supply circuit in which a heating medium is supplied to the space heating unit and the water supply unit, respectively. The apparatus is provided with a heat pump unit, a boiler unit, a circuit switching means, an operation mode means and a heat source control means. The heat pump unit is configured to heat the heating medium. The boiler unit is configured to heat the heating medium. The circuit switching means is configured to switch a flow circuit of the heating medium between the space heating circuit and the water supply circuit. The operation mode means is configured to switch an operation mode of the apparatus between a space heating mode and a water supply mode by controlling the circuit switching means such that the space heating circuit is activated during the space heating mode and the water supply circuit is activated during the water supply mode. The heat source control means is configured to stop the heat pump unit and the boiler unit upon changes in the operation mode of the apparatus while the boiler unit is in operation.
With the above configuration, it is possible to prevent the heat pump unit from being operated when the temperature of the heating medium is beyond the operable temperature of a refrigerant of the heat pump unit. Therefore, the damage of the heat pump unit can be avoided.
The technical meaning of "stop" covers that the heat source control means is configured to hold the heat pump unit and the boiler unit in an inactivated state. The technical meaning of "while the boiler unit is in operation" includes the cases where only the boiler unit is in operation and where the boiler unit and the heat pump unit are in operation.
According to a preferred embodiment of the apparatus mentioned above, the heat source control means is further configured to stop the heat pump unit and the boiler unit during a predetermined period of time.
With the above configuration, it is possible to prevent more reliably the heat pump unit from being operated while the temperature of the heating medium is beyond the operable temperature of a refrigerant of the heat pump unit. Therefore, the damage of the heat pump unit can be more securely avoided.
Preferably, the heat pump is used as the heat source after the predetermined period of time has passed since the operation mode means switched the operation mode of the apparatus. With this configuration, it is possible to secure an opportunity to utilize the heat pump unit as the heat source.

Furthermore, with the above configuration, the apparatus can achieve high efficiency. This is because the heat of the heating medium at a relatively high temperature is utilized for space heating or heating the water in the water tank while the heat pump unit and the boiler unit are stopped.

According to another preferred embodiment of the apparatus mentioned above, the heat source control means is further configured to keep the heat pump unit operating upon changes in the operation mode of the apparatus while the heat pump unit is in operation and the boiler unit is not in operation.

It may be unnecessary to stop the heat pump unit and the boiler unit upon changes in the operation mode of the apparatus while the heat pump unit is in operation and the boiler unit is not in operation. This is because it is unlikely that the heating medium has been heated to a temperature beyond the operable temperature of the heat pump unit. Therefore, it is preferable to start heating the heating medium by the heat pump unit without stopping the heat pump unit.

Further, with this configuration, it may be possible to decrease a frequency of start and stop of a compressor of the heat pump unit. Therefore, it is possible to promote energy saving.

According to an alternative preferred embodiment of the apparatus, the heat source control means is further configured to stop the heat pump unit and the boiler unit upon changes in the operation mode of the apparatus while the heat pump unit is in operation and the boiler unit is not in operation.

With this configuration, it is possible to prevent more securely the heat pump unit from being operated when the temperature of the heating medium is beyond the operable temperature of a refrigerant of the heat pump unit. Therefore, the damage of the heat pump unit can be avoided more securely.

According to another preferred embodiment of the apparatus mentioned above, the heat source control means is further configured to stop the heat pump unit and the boiler unit upon changes in the operation mode of the apparatus from the space heating mode to the water supply mode while the boiler unit is in operation.

With this configuration, it is possible to prevent the heat pump unit from being operated when the temperature of the heating medium is beyond the operable temperature of a refrigerant of the heat pump unit during the water supply mode. The two heat sources stop until the entire heating medium in the water supply circuit reaches to a stable temperature even if tubes constituting the water supply circuit are relatively long, and therefore a lot of heating medium stagnates and is cooled therein.

According to another preferred embodiment of the apparatus mentioned above, the space heating circuit is provided with at least one flow control means configured to control a flow rate of the heating medium flowing in the space heating circuit.

With this configuration, it is possible to prevent the heat pump unit from being operated when the temperature of the heating medium is beyond the operable temperature of a refrigerant of the heat pump unit during the space heating mode, even if the flow rate of the heating medium flowing in the space heating circuit fluctuates.

According to another preferred embodiment of the apparatus mentioned above, the heat pump unit includes a heat-pump-side heat exchange means which is configured to exchange heat between the heating medium and a refrigerant circulating in the heat pump unit. The boiler unit includes a boiler-side heat exchange means which is configured to heat the heating medium. The heat-pump-side heat exchange means and the boiler-side heat exchange means are connected in series in both of the space heating circuit and the water supply circuit.

With this configuration, it is possible to heat the heating medium by using both of the heat pump unit and the boiler unit simultaneously. Therefore, it is possible to improve efficiency in a certain condition by using both of the heat pump unit and the boiler unit simultaneously instead of using either one of the heat pump unit and the boiler unit.

According to another preferred embodiment of the apparatus mentioned above, the apparatus is further provided with a first detecting means. The first detecting means is arranged at a location on or in a pipe in which the heating medium is to flow, on the upstream side of the heat pump unit, and on the downstream side of both of the space heating unit and the water supply unit with respect to a flow direction of the heating medium. The first detecting means is configured to detect a first temperature of the heating medium. The heat source control means is configured to operate the heat pump unit after the predetermined period of time based on the first temperature after the stoppage of the heat pump unit and the boiler unit upon changes in the operation mode of the apparatus while the boiler unit is in operation.

With this preferred embodiment of the invention, the heat pump unit can be activated only when the heating medium has an appropriate temperature for the heat pump unit. Accordingly, it is possible to avoid supplying too hot heating medium to the heat pump unit in a more secure manner.

According to another preferred embodiment of the apparatus having the first detecting means mentioned above, the heat source control means is configured to determine which of the heat pump unit or the boiler unit, or both of the heat pump unit and the boiler unit is/are to be operated based on the operation mode of the apparatus and the first temperature after the stoppage of the heat pump unit and the boiler unit upon changes in the operation mode of the apparatus while the boiler unit is in operation.

With this preferred embodiment of the invention, it is possible to start heating the heating medium immediately after the stoppage of the heat pump unit and the boiler unit upon changes in the operation mode of the apparatus while the boiler unit is in operation while avoiding supply of too hot heating medium to the heat pump unit as well as securing opportunity to utilize the heat pump unit properly as the heat source.

**BRIEF DESCRIPTION OF THE DRAWINGS**

FIG.1 is a schematic diagram of a space heating and water supply system including an apparatus for space heating and warm water supply according to an embodiment of the present invention.

FIG.2 is a block diagram of the apparatus for space heating and warm water supply according to FIG.1.

FIG.3a is a diagram for conceptually explaining the fundamental selection of a heat source to be operated during a water supply mode between a heat pump unit and a boiler unit in the apparatus for space heating and warm water supply according to FIG.1.

FIG.3b is a diagram for conceptually explaining the preferable selection of a heat source to be operated during the water supply mode between the heat pump unit and the boiler unit in the apparatus for space heating and warm water supply according to FIG.1.

FIG.4 is a flow chart schematically representing a method for switching a heat source to be operated during the water supply mode between the heat pump unit and the boiler unit in the apparatus for space heating and warm water supply according to FIG.1.

FIG. 5 is a flow chart schematically representing an initial operation of the heat source control means executed when the operation mode is switched in the apparatus for space heating and warm water supply according to FIG. 1.

FIG. 6 is a flow chart schematically representing another initial operation of the heat source control means executed when the operation mode is switched in the apparatus for space heating and warm water supply according to FIG. 1.

**Detailed Description of Preferred Embodiments**

Preferred embodiments of the apparatus for space heating and warm water supply according to the present invention will be described with reference to the drawings.

It should be understood that the detailed explanation are provided merely for the purpose of explanation, and are in no way to be construed as limiting of the present invention. While the present invention will be described with reference to exemplary preferred embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention will be described herein with reference to preferred structures, materials and embodiments, the present invention is not intended to be limited to the particulars disclosed herein; rather, the present invention extends to all configurations within the scope of the appended claims.

1. Space Heating and Water Supply System

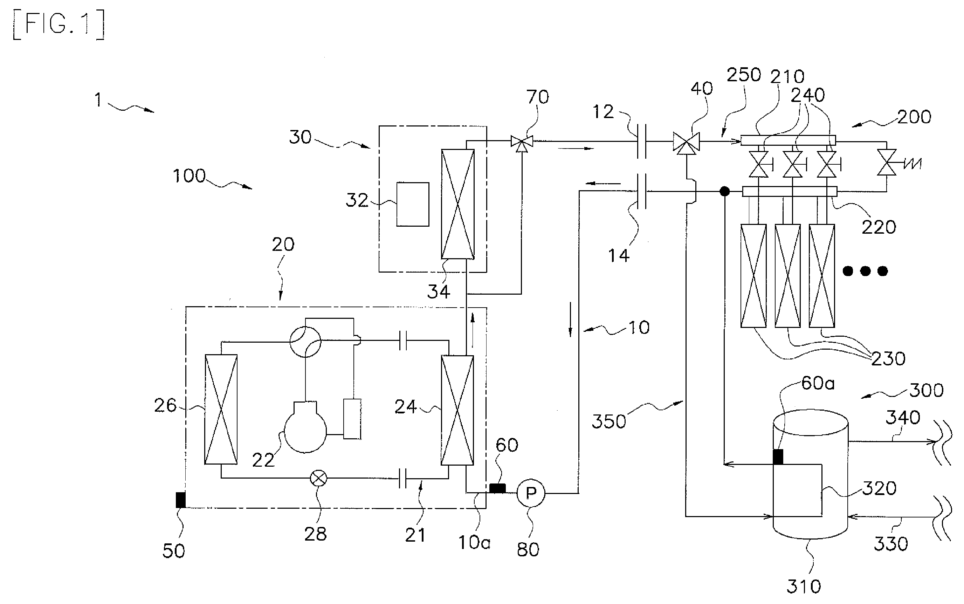

FIG.1 shows a schematic diagram of a space heating and water supply system 1 including the apparatus 100 as an embodiment of the apparatus for space heating and warm water supply according to the present invention.

For example, the space heating and water supply system 1 is used for space heating and warm water supply in a residential building. However, the space heating and water supply system 1 may be used in another type of building. The space heating and water supply system 1 includes the apparatus 100, a space heating unit 200, and a water supply unit 300.

The apparatus 100 heats a heating medium which is used for space heating and heating domestic water. The apparatus 100 has a heat pump unit 20 and a boiler unit 30 as heat sources to heat the heating medium as shown in FIG.1. For example, the heating medium is an aqueous medium. The type of heating medium is given here by way of example, and not by way of limitation. The apparatus 100 can supply the heating medium heated by at least one of the heat source to the space heating unit 200 and the water supply unit 300. The apparatus 100 can receive the heating medium returned from the space heating unit 200 or the water supply unit 300. The apparatus 100 has an outlet 12 of the heating medium through which the heating medium flows out toward the space heating unit 200 or the water supply unit 300. The apparatus 100 has an inlet 14 of the heating medium through which the heating medium retuned from the space heating unit 200 or the water supply unit 300 flows in. The configuration of the apparatus 100 will be explained in detail later.

The space heating unit 200 includes at least one heat emitter 230 such as a radiator. In FIG.1 the space heating unit 200 includes a plurality of heat emitters 230. The type of the heat emitter 230 is not limited to the radiator. The heat emitter 230 may be a floor heating or a convector. Each of the heat emitters 230 is located in a space to be heated. The space heating unit 200 further includes an inlet header 210, an outlet header 220, and at least one valve 240. The inlet header 210 is connected to the outlet 12 of the apparatus 100 by piping. The outlet header 220 is connected to the inlet 14 of the apparatus 100 by piping. Each of the heat emitters 230 is connected to both of the inlet header 210 and the outlet header 220 by piping. The piping is configured such that the heating medium can flow in the heat emitters 230 from the inlet header 210 to the outlet header 220 through the piping. In order to control a flow of the heating medium through the heat emitters 230, a valve 240 is arranged on the piping between the inlet header 210 and each of the heat emitters 230 or on the piping between each of the heat emitters 230 and the outlet header 220. The space heating unit 200 further includes at least one thermostat (not shown) with a temperature sensor (not shown) for measuring the temperature in the space to be heated by the space heating unit 200. A user of the space heating unit 200 may set a target room temperature to the thermostat. The thermostat sends a signal to the apparatus 100 for requesting an operation of the apparatus 100 in a space heating mode based on the user's command and the temperature detected by the temperature sensor. The thermostat controls the operation of the valve 240 based on the target room temperature and the temperature detected by the temperature sensor.

The apparatus 100 is connected to a space heating unit 200 so as to form a space heating circuit 250 in which the heating medium is circulated. Specifically, the outlet 12 of the heating medium of the apparatus 100 is connected to the inlet header 210 of the space heating unit 200 by piping and the inlet 14 of the heating medium of the apparatus 100 is connected to the outlet header 220 of the space heating unit 200 by piping. Thereby, the space heating circuit 250 is formed. When the apparatus 100 is operated in the space heating mode during which the space heating circuit 250 is activated and the heat pump unit 20 and/or the boiler unit 30 is operated, the heating medium heated with the heat pump unit 20 and/or the boiler unit 30 is supplied to the space heating unit 200 in the space heating circuit 250. The space heating circuit 250 is configured such that the heating medium having been used for space heating at the space heating unit 200 returns to the apparatus 100 in the space heating circuit 250 after having radiated its heat at the heat emitter 230. The space heating circuit 250 is provided with the flow control means 240 configured to control a flow rate of the heating medium flowing in the space heating circuit 250.

The water supply unit 300 includes a water tank 310 and a heat exchange part 320. An inlet pipe 330 of the domestic water and an outlet pipe 340 of the domestic water are connected to the water tank 310. Domestic water is supplied to the water tank 310 through the inlet pipe 330 of the domestic water. Domestic water is stored in the water tank 310. The heat exchange part 320 is arranged in the water tank 310. The heat exchange part 320 has an inlet and an outlet of the heating medium. The inlet of the heat exchange part 320 is connected to outlet 12 of the heating medium of the apparatus 100 by piping. The outlet of the heat exchange part 320 is connected to inlet 14 of the heating medium of the apparatus 100 by piping. Domestic water in the water tank 310 is heated with the heating medium flowing in the heat exchange part 320. Heated domestic water flows out from the water tank 310 through the outlet pipe 340 of the domestic water. The water supply unit 300 further includes a controller (not shown) with a temperature sensor (not shown) for measuring the temperature of the water in the water tank 310. A user of the water supply unit 300 may set a target water temperature to the controller. The controller sends a signal to the apparatus 100 for requesting an operation of the apparatus 100 in a water supply mode based on the target water temperature and the temperature detected by the temperature sensor.

The apparatus 100 is connected to a water supply unit 300 having a water tank 310 so as to form a water supply circuit 350 in which the heating medium circulates. Specifically, the outlet 12 of the heating medium of the apparatus 100 is connected to the inlet of the heat exchange part 320 by piping. The inlet 14 of the heating medium of the apparatus 100 is connected to the outlet of the heat exchange part 320 by piping. Thereby, the water supply circuit 350 is formed. When the apparatus 100 is operated in the water supply mode during which the water supply circuit 350 is activated and the heat pump unit 20 or the boiler unit 30 is operated, the heating medium heated with the heat pump unit 20 or the boiler unit 30 is supplied to the water supply unit 300 in the water supply circuit 350. The water supply circuit 350 is configured such that the heating medium having been used for heating domestic water at the water supply unit 300 returns to the apparatus 100 in the water supply circuit 350 after having radiated its heat at the heat exchange part 320.

2. Configuration of the Apparatus for Space Heating and Water Supply

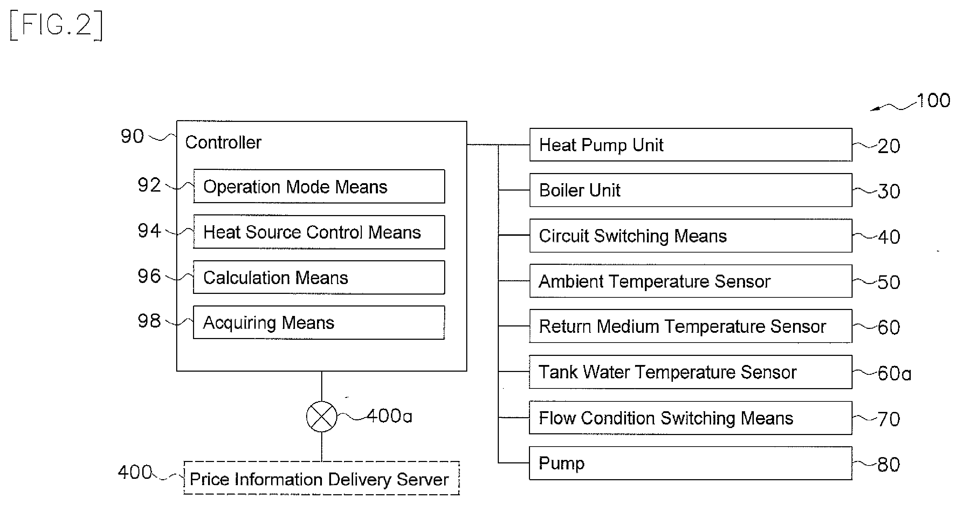

As shown in FIG.1, the apparatus 100 for space heating and water supply is mainly provided by piping 10, the heat pump unit 20, the boiler unit 30, a circuit switching means 40, an ambient temperature sensor 50, a return medium temperature sensor 60, a tank water temperature sensor 60a, a flow mode switching means 70, and a pump 80. As shown in FIG.2, the apparatus 100 is further provided with a controller 90.

The piping 10 constitutes a part of the space heating circuit 250 and the water supply circuit 350. The piping 10 connects the inlet 14 of the heating medium, the pump 80, a first heat exchanger 24 of the heat pump unit 20, a heat exchanger 34 of the boiler unit 30, and the outlet 12 of the heating medium. Thereby, the heating medium flows as follows. The heating medium flowing into the inlet 14 of the heating medium is sucked into the pump 80 through the piping 10. The pump 80 delivers the heating medium toward the first heat exchanger 24 of the heat pump unit 20 through the piping 10. The heating medium passing through the first heat exchanger 24 of the heat pump unit 20 flows through the piping 10 toward the outlet 12 of the heating medium via the heat exchanger 34 of the boiler unit 30 or directly. The heating medium then flows out from the outlet 12 of the heating medium toward the space heating unit 200 or the water supply unit 300.

The heat pump unit 20 is configured to heat the heating medium flowing in the space heating circuit 250 or the water supply circuit 350. The heat pump unit 20 is driven by electricity. The heat pump unit 20 includes a conventional refrigerant circuit 21 in which a refrigerant circulates a compressor 22, the first heat exchanger 24, an expansion mechanism 28 and a second heat exchanger 26. The refrigerant is, for example, R-410A or another HFC-based refrigerant. The type of refrigerant is given here by way of example, and not by way of limitation. The compressor 22 is a mechanism to compress the refrigerant. A motor (not shown) of the compressor 22 may be driven at variable frequency so that the heat pump unit 20 may be driven under full load but also under a partial load. For example, the frequency of the motor of the compressor 22 may be decided based on the ambient temperature around the heat pump unit 20 detected by the ambient temperature sensor 50. Alternatively, the motor (not shown) of the compressor 22 may be driven at constant frequency, although it is preferable that motor of the compressor 22 is driven at variable frequency. The first heat exchanger 24 exchanges heat between the heating medium and the refrigerant circulating in the heat pump unit 20. In the first heat exchanger 24, the heating medium circulating in the space heating circuit 250 or in the water supply circuit 350 exchanges heat with the refrigerant circulating in the refrigerant circuit 21. In a heating operation with the heat pump unit 20 where the heating medium passing through the first heat exchanger 24 is heated, the first heat exchanger 24 functions as a condenser of the refrigerant. In the second heat exchanger 26, the refrigerant circulating in the refrigerant circuit 21 exchanges heat with ambient air. In the heating operation, the second heat exchanger 26 functions as an evaporator of the refrigerant. The expansion mechanism 28 is an electric expansion valve which depressurizes refrigerant flowing into the second heat exchanger 26.

The boiler unit 30 is configured to heat the heating medium flowing in the space heating circuit 250 or the water supply circuit 350. The boiler unit 30 is driven by fuel. The boiler unit 30 is preferably a conventional gas fired condensing boiler. The boiler unit 30 includes a burner 32 and the heat exchanger 34. The heat generated by the burner 32 is transferred to the heating medium at the heat exchanger 34. The heat exchanger 34 heats the heating medium.

The circuit switching means 40 is configured to switch a flow circuit of the heating medium between the space heating circuit 250 and the water supply circuit 350. The circuit switching means 40 selectively connects the outlet 12 of the heating medium of the apparatus 100 to the inlet header 210 of the space heating unit 200 or the inlet of the heat exchange part 320 of the water supply unit 300. Alternatively, the circuit switching means 40 may be arranged on the piping between the inlet 14 of the heating medium of the apparatus 100 and the outlet header 220 of the space heating unit 200 and between the inlet 14 of the heating medium of the apparatus 100 and the outlet of the heat exchange part 320 of the water supply unit 300. In this case, the outlet 12 of the heating medium of the apparatus 100 may be connected to the inlet header 210 of the space heating unit 200 and the inlet of the heat exchange part 320 of the water supply unit 300 by piping. The circuit switching means 40 is, for example, an electric or solenoid three-way valve arranged on the piping as shown in FIG.1. However, the circuit switching means 40 may be configured by a plurality of electric or solenoid valves arranged on the piping.

The ambient temperature sensor 50 is configured to detect an ambient temperature around the heat pump unit 20. The ambient temperature sensor 50 is arranged, for example, on a casing (not shown) of the heat pump unit 20 disposed outside or a machine room.

The return medium temperature sensor 60 is configured to detect a temperature of the heating medium which has returned to the apparatus 100 after circulating in the space heating unit 200 or the water supply unit 300. The return medium temperature sensor 60 is arranged on or in a pipe 10a which constitutes a part of the piping 10. The return medium temperature sensor 60 is arranged at a location on the upstream side of both of the heat pump unit 20 and the boiler unit 30, and on the downstream side of both of the space heating unit 200 and the water supply unit 300 with respect to a flow direction of the heating medium. The return medium temperature sensor 60 is arranged at a location on or in the piping 10 between the inlet 14 of the heating medium and the first heat exchanger 24 of the heat pump unit 20. Preferably, the return medium temperature sensor 60 is located immediately before the first heat exchanger 24 with respect to the flow direction of the heating medium.

When the apparatus 100 is operated in the water supply mode, the temperature detected by the return medium temperature sensor 60 is used as the temperature of water in the water tank 310 of the water supply unit 300 in a steady state. The steady state means that the apparatus 100 has been operated in the water supply mode continuously for a sufficient time (e.g. a few minutes). By using the temperature detected by the return medium temperature sensor 60 as the temperature of the water in the water tank 310, it is possible to acquire the temperature of water in the water tank 310 even when there is a temperature distribution in the water stored in the water tank 310.

The tank water temperature sensor 60a is configured to detect a temperature of the water in the water tank 310 of the water supply unit 300. The tank water temperature sensor 60a is arranged in or on the water tank 310 of the water supply unit 300 as shown in FIG.1.

The flow mode switching means 70 is configured to switch a flow mode of the heating medium between a boiler usage mode and a boiler bypass mode. In the boiler usage mode, the heating medium circulating the space heating circuit 250 or the water supply circuit 350 flows though the heat exchanger 34 of the boiler unit 30. In other words, in the boiler usage mode, the first heat exchanger 24 and the heat exchanger 34 are connected in series in both of the space heating circuit 250 and the water supply circuit 350. In the boiler bypass mode, the heating medium circulating the space heating circuit 250 or the water supply circuit 350 bypasses, i.e. does not flow though, the heat exchanger 34 of the boiler unit 30. When the boiler unit 30 is operated as the heat source to heat the heating medium, the flow mode switching means 70 sets the flow mode of the heating medium at the boiler usage mode. The flow mode switching means 70 is, for example, an electric or solenoid three-way valve arranged on the piping 10. As shown in FIG.1, the flow mode switching means 70 selectively connects the outlet of the heat exchanger 24 or the outlet of the heat exchanger 34 to the outlet 12 of the apparatus 100. The flow mode switching means 70 may be configured by a plurality of electric or solenoid valves arranged on the piping 10.

In another embodiment, the flow mode switching means 70 may be omitted. In this case, the heating medium circulating the space heating circuit 250 or the water supply circuit 350 always flows though the heat exchanger 34 of the boiler unit 30. However, it is preferable the flow mode switching means 70 is provided with the apparatus 100 to reduce the flow resistance when the boiler unit 30 is not used for heating the heating medium.

The pump 80 is arranged on the piping 10 to circulate the heating medium in the space heating circuit 250 or the water supply circuit 350. In the FIG.1, the pump 80 is arranged on the upstream side of both of the heat pump unit 20 and the boiler unit 30 with respect to a flow direction of the heating medium. However, the pump 80 may be arranged on the downstream side of both of the heat pump unit 20 and the boiler unit 30 with respect to a flow direction of the heating medium.

The controller 90 controls the operation of the apparatus 100. The controller 90 includes a microcomputer and a memory (not shown). The microcomputer executes programs stored in the memory, whereby the controller 90 controls the operation of the components of the apparatus 100 based on the signals received from the space heating unit 200 and the water supply unit 300 and the detection results from the sensors including the ambient temperature sensor 50, the return medium temperature sensor 60, and the tank water temperature sensor 60a.

The controller 90 is electrically connected to the heat pump unit 20, the boiler unit 30, the circuit switching means 40, the ambient temperature sensor 50, the return medium temperature sensor 60, the tank water temperature sensor 60a, the flow mode switching means 70, the pump 80 as shown in FIG.2. The controller 90 is also electrically connected with the thermostat of the space heating unit 200 and the controller of the water supply unit 300 to exchange signals. The controller 90 is preferably electrically connected to price information delivery server 400 via a network 400a such as an internet. The price information delivery server 400 delivers the electricity price and the fuel price. The electricity price and the fuel price are defined as a value calculated by dividing the price of energy by the amount of energy. For example, the electricity price and the fuel price are expressed as a price per kilo joule. The information indicating the electricity price and the fuel price may include the ratio of the electricity price to the fuel price. For example, the price information delivery server 400 is a server operated by an energy supplier.

The controller 90 includes an operation mode means 92, a heat source control means 94, a calculation means 96, and an acquiring means 98 as function sections as shown in FIG.2.

The operation mode means 92 is configured to switch the operation mode of the apparatus 100 between the space heating mode and the water supply mode by controlling the circuit switching means 40. When the operation mode means 92 switches the operation mode of the apparatus 100 to the space heating mode, the circuit switching means 40 is controlled to connect the outlet 12 of the heating medium of the apparatus 100 to the inlet header 210. Thereby, the heating medium circulates in the space heating circuit 250. When the operation mode means 92 switches the operation mode of the apparatus 100 to the water supply mode, the circuit switching means 40 is controlled to connect the outlet 12 of the heating medium of the apparatus 100 to the inlet of the heat exchange part 320. Thereby, the heating medium circulates in the water supply circuit 350. The operation mode to which the operation mode means 92 switches is determined based on the signals sent from the space heating unit 200 and/or the water supply unit 300.

The heat source control means 94 determines a heat source/heat sources to be operated and operates the heat pump unit 20 and/or the boiler unit 30 which is determined as a heat source/heat sources to be operated.

During the water supply mode, either the heat pump unit 20 or the boiler unit 30 is selectively operated.

During the water supply mode, the heat source control means 94 is configured to switch between the heat pump unit 20 and the boiler unit 30 a heat source to be operated based on the ambient temperature detected by the ambient temperature sensor 50 and the temperature of the water in the water tank 310 detected. The temperature detected by the return medium temperature sensor 60 is used as the temperature of the water in the water tank 310. Alternatively, the temperature detected by the tank water temperature sensor 60a may be used as the temperature of the water in the water tank 310. Preferably, the temperature detected by the tank water temperature sensor 60a is used after a predetermined time (e.g. a few minute) from the start of the operation of the apparatus 100 in the water supply mode.

Preferably, the heat source control means 94 is configured to switch between the heat pump unit 20 and the boiler unit 30 the heat source to be operated during the water supply mode further based on information indicating energy efficiency of the heat pump unit 20 and the boiler unit 30. Preferably, the coefficient of performance (COP) of the heat pump unit 20 calculated by the calculation means 96 is used as the information indicating energy efficiency of the heat pump.

More preferably, the heat source control means 94 is configured to switch between the heat pump unit 20 and the boiler unit 30 a heat source to be operated during the water supply mode based on the information indicating the electricity price and the fuel price acquired by the acquiring means 98. Specifically, the heat source control means 94 may be configured to switch between the heat pump unit 20 and the boiler unit 30 a heat source to be operated during the water supply mode based on the comparison result between COP of the heat pump unit 20 and a break-even coefficient of performance (BECOP). The BECOP is calculated by the calculation means 96 using the information indicating the electricity price and the fuel price acquired by the acquiring means 98.

It will be explained in detail later how the heat source control means 94 switches a heat source to be operated between the heat pump unit 20 and the boiler unit 30 during the water supply mode.

During the space heating mode, the heat source control means 94 is configured to determine the heat pump unit 20, the boiler unit 30, or both of the heat pump unit 20 and the boiler unit 30 as at least one heat source to be operated. For example, the heat source control means 94 is configured to determine at least one heat source to be operated during the space heating mode based on the ambient temperature detected and the target room temperature as disclosed in EP 2 463 591 A1. That is to say, the heat source control means 94 is configured to determine at least one heat source to be operated during the space heating mode as follows.

Firstly, the user sets a target room temperature via the thermostat of the space heating unit 200. An ambient temperature around the heat pump unit 20 is detected by the ambient temperature sensor 50. Preferably, the calculation means 96 calculates the coefficient of performance of the heat pump unit 20 at a set flow temperature ($COP_{Set\ Flow\ Temperature}$) from the ambient temperature around the heat pump unit 20 and the set flow temperature. The flow temperature is a temperature of the heating medium which flows into the inlet header 210 of the heat pump unit 20. The set flow temperature is a flow temperature required to obtain the target room temperature set by the user.

The heat source control means 94 determines the heat pump unit 20 as a heat source to be operated during the space heating mode when the $COP_{Set\ Flow\ Temperature}$ is higher than the BECOP and the heat pump unit 20 can heat up the temperature of the heating medium up to the set flow temperature.

The heat source control means 94 determines the heat pump unit 20 and the boiler unit 30 as heat sources to be operated during the space heating mode when satisfying one of the following conditions.

1) $COP_{Set\ Flow\ Temperature}$ is higher than the BECOP, but the heat pump unit 20 can not heat up the temperature of the heating medium up to the set flow temperature.

2) $COP_{Set\ Flow\ Temperature}$ is equal to or lower than the BECOP, but it is possible to set an intermediate flow temperature at which the coefficient of performance of the heat pump unit 20 ($COP_{Intermediate\ Flow\ Temperature}$) is higher than the BECOP. The calculation means 96 calculate the $COP_{Intermediate\ Flow\ Temperature}$ from the ambient temperature around the heat pump unit 20 and the set flow temperature as with the $COP_{Set\ Flow\ Temperature}$.

The heat source control means 94 determines the boiler unit 30 as a heat source to be operated during the space heating mode when $COP_{Set\ Flow\ Temperature}$ is equal to or lower than the BECOP and it is not possible to set the intermediate flow temperature at which $COP_{Intermediate\ Flow\ Temperature}$ is higher than the BECOP.

When the apparatus 100 starts its operation from the stopped state, the heat source control means 94 preferably determines the heat source to be operated immediately and operates it as soon as possible.

In a case where the apparatus 100 has been operated and the operation mode means 92 switches the operation mode of the apparatus 100 while the boiler unit 30 is in operation, the heat source control means 94 delays the determination of the heat source to be operated. When the determination of the heat source is delayed, the heat source control means 94 stops the heat pump unit 20 and the boiler unit 30. Preferably, when the determination of the heat source is delayed, the heat source control means 94 stops the heat pump unit 20 and the boiler unit 30 during a predetermined period of time.

On the other hand, in a case where the apparatus 100 has been operated and the operation mode means 92 switches the operation mode of the apparatus 100 while the heat pump unit 20 is in operation and the boiler unit 30 is not in operation, the heat source control means 94 preferably keeps the heat pump unit 20 operating.

It will be explained in detail later the initial operation of the heat source control means 94 executed when the operation mode of the apparatus 100 is switched.

The calculation means 96 is configured to calculate from the ambient temperature around the heat pump unit 20 detected by the ambient temperature sensor 50 the coefficient of performance (COP) of the heat pump unit 20. The calculated COP of the heat pump unit 20 is used as the information indicating energy efficiency of the heat pump unit 20 by the heat source control means 94 during the water supply mode. For example, the calculation means 96 calculates COP of the heat pump unit 20 with a prepared function using the ambient temperature around the heat pump unit 20 as a variable. The calculation means 96 may calculate COP of the heat pump unit 20 using a table, stored in the memory, which associates COPs of the heat pump unit 20 with the ambient temperatures around the heat pump unit 20.

Preferably, the calculation means 96 is configured to calculate further from the temperature of the water in the water tank 310 the coefficient of performance (COP) of the heat pump unit 20. The temperature detected by the return medium temperature sensor 60 is used as the temperature of the water in the water tank 310. Alternatively, the temperature detected by the tank water temperature sensor 60a may be used as the temperature of the water in the water tank 310. Preferably, the temperature detected by the tank water temperature sensor 60a may be used after a predetermined time (e.g. a few minute) from the start of operation of the apparatus 100 in the water supply mode. For example, the calculation means 96 calculates COP of the heat pump unit 20 with a prepared function using the ambient temperature around the heat pump unit 20 and the temperature of the water in the water tank 310 as variables. The calculation means 96 may calculate COP of the heat pump unit 20 using a table stored in the memory. The table stores COPs of the heat pump unit 20 and combinations of the ambient temperature around the heat pump unit 20 and the temperature of the water in the water tank 310 in association with each other.

The calculation means 96 is further configured to calculate the break-even coefficient of performance (BECOP) from the information indicating the electricity price and the fuel price acquired by the acquiring means 98 and a boiler efficiency of the boiler unit 30. For example, the boiler efficiency of the boiler unit 30 is stored in the memory (not shown) of the controller 90. BECOP is calculated with a following equation.

$$\text{BECOP} = \text{Electricity Price [price per kilo joule]} / \text{Fuel Price [price per kilo joule]} * \text{Boiler Efficiency}$$

Preferably, the calculation means 96 is further configured to calculate the coefficient of performance of the heat pump unit 20 at a set flow temperature ($\text{COP}_{\text{Set Flow Temperature}}$) from the ambient temperature around the heat pump unit 20 and the set flow temperature as explained above. For example, the calculation means 96 calculates $\text{COP}_{\text{Set Flow Temperature}}$ with functions prepared for each of the set flow temperatures using the ambient temperature around the heat pump unit 20. The calculation means 96 may calculate $\text{COP}_{\text{Set Flow Temperature}}$ using tables prepared for each of the set flow temperatures and stored in the memory. The tables store $\text{COPs}_{\text{Set Flow Temperature}}$ and the ambient temperature around the heat pump unit 20 in association with each other. For example, the heat source control means 94 is configured to operate the heat pump unit 20, the boiler unit 30, or both of the heat pump unit 20 and the boiler unit 30 as at least one heat source to be operated during the space heating mode based on $\text{COP}_{\text{Set Flow Temperature}}$ and BECOP as explained above.

The acquiring means 98 is configured to acquire information indicating the electricity price and the fuel price delivered from the price information delivery server 400 via network 400a. In this embodiment, the acquiring means 98 is configured to acquire the information indicating the actual price over network 400a. However, in another embodiment, the acquiring means may be a table storing the prices of electricity and fuel.

3. Operation of the Heat Source Control Means of the Apparatus for Space Heating and Water Supply

In this section, it will be mainly explained how a heat source to be operated is switched by the heat source control means 94 during the water supply mode and initial operation of the heat source control means 94 executed when the operation mode of the apparatus 100 is switched. In the explanation about the initial operation of the heat source control means 94, it will be explained in what condition the heat source control means 94 stops the heat pump unit 20 and the boiler unit 30 when the operation mode means switched the operation mode.

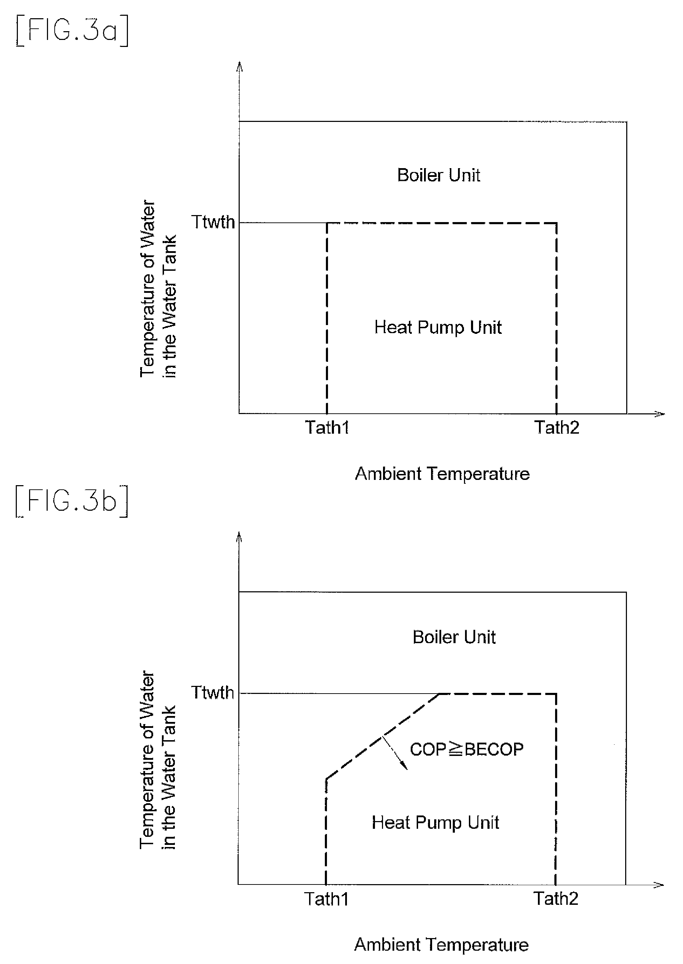

Firstly, it will be explained how a heat source to be operated is determined during water supply mode with reference to a diagram of FIG.3a and 3b.

FIGs.3a and 3b show diagrams for conceptually explaining the selection of a heat source to be operated during the water supply mode between the heat pump unit 20 and the boiler unit 30. FIG.3a show a diagram for the fundamental selection and FIG.3b show a diagram for the preferable selection.

In FIGs.3a and 3b, in the case the ambient temperature around the heat pump unit 20 and the temperature of the water in the water tank 310 fall within the area enclosed by the dot line, the heat pump unit 20 is selected to be operated in that condition. In the other case the ambient temperature around the heat pump unit 20 and the temperature of the water in the water tank 310 fall outside of the area enclosed by the dot line, the boiler unit 30 is selected to be operated in that condition.

During water supply mode, the heat source to be operated is selected between the heat pump unit 20 and the boiler unit 30 based on two conditions a) and b) mentioned below.

a) Ambient temperature around the heat pump unit is between a lower threshold Tath 1 and an upper threshold Tath 2

When the heating medium circulating in the space heating circuit 250 or the water supply circuit 350 is heated with the heat pump unit 20, the refrigerant circulating in the refrigerant circuit 21 exchanges heat with ambient air and evaporates at the second heat exchanger 26. If the temperature of the ambient air is too low, it becomes difficult to obtain an enough heat for evaporating the refrigerant and to operate the heat pump unit 20 properly. Also, if the temperature of the ambient air is too high, the temperature of the refrigerant discharged from the compressor 22 rises too much and thereby it becomes difficult to operate the heat pump unit 20 properly. Therefore, the heat pump unit 20 is preferably operated in an ambient temperature range between Tath 1 (lower threshold) and Tath 2 (upper threshold) as shown in FIG.3a.

b) Target temperature of water in the water tank is under an upper threshold Ttwth

The heat pump unit 20 can heat up the temperature of the water in the water tank 310 up to a certain temperature (Ttwth). However, if it is required to heat the water in the water tank 310 further, the boiler unit 30 needs to be used as the heat source instead of the heat pump unit 20. Therefore, the heat pump unit 20 is operated when the temperature of the water in the water tank 310 is lower than Ttwth (upper threshold) as shown in FIG.3a.

The conditions a) and b) can be illustrated as shown in FIG.3a. When the ambient temperature around the heat pump unit 20 and the temperature of the water in the water tank 310 fall within the area enclosed by the dot line, the heat pump unit 20 is selected to be operated in that condition. The area enclosed by the dot line is defined such that the ambient temperature is between the lower threshold Tath1 and the upper threshold Tath2 and the temperature of the water in the water tank 310 is below the upper threshold Ttwth.

When the ambient temperature around the heat pump unit 20 and the temperature of water in the water tank 310 meet the above conditions a) and b), it is possible to operate the heat pump unit. However, from the perspective of efficiency, there is still room for improvement. Therefore, preferably, the heat source to be operated is selected between the heat pump unit 20 and the boiler unit 30 during water supply mode based on additional condition c) mentioned below.

c) COP of the heat pump unit

Generally speaking, when the ambient temperature around the heat pump unit 20 is relatively low and the temperature of the water in the water tank 310 is relatively high, it becomes difficult to operate the heat pump unit 20 more efficiently than the boiler unit 30. Therefore, even if the ambient temperature around the heat pump unit 20 and the temperature of water in the water tank 310 meet the above conditions a) and b), it is preferable to operate the boiler unit 30 instead of the heat pump unit 20 when the ambient temperature around the heat pump unit 20 and the temperature of the water in the water tank 310 fall out of the area enclosed by the dot line shown in FIG.3b. When the heat pump unit 20 is operated in the range corresponding to the inside the area enclosed by the dot line in FIG.3b, the heat pump unit 20 shows a COP higher than the BECOP. In other words, the heat pump unit 20 can be operated more cost efficiently than the boiler unit 30. The area enclosed by the dot line is defined such that the ambient temperature is between the lower threshold Tath1 and the upper threshold Tath2, the temperature of the water in the water tank 310 is below the upper threshold Ttwth, and the COP is higher than the BECOP.

It is noted that the shape of the area enclosed by the dot line in FIG.3b is given here by way of explanation, and not by way of limitation. Although the area suitable for operation of the heat pump unit 20 is enclosed by the straight lines in FIG.3b, but a part of the lines may be curve lines instead of the straight lines.

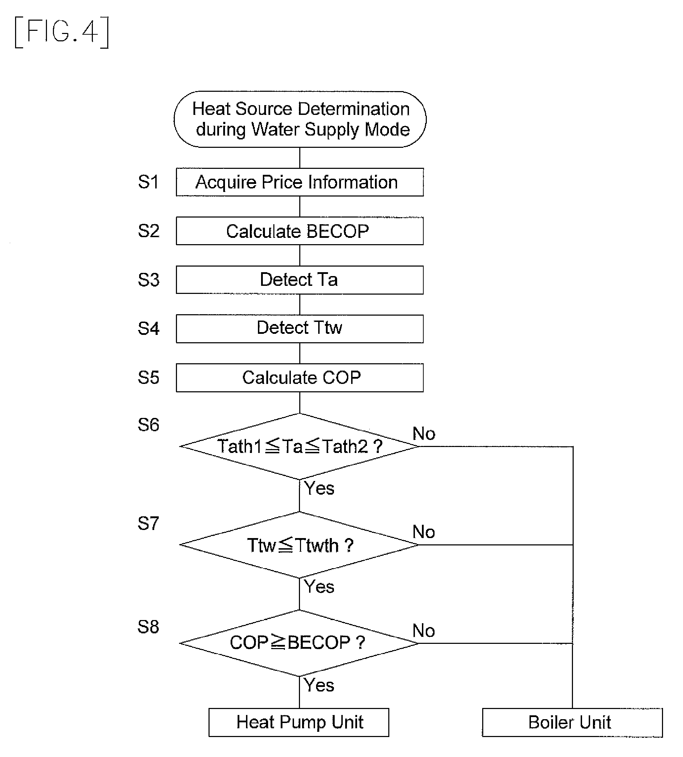

Now, it will be explained a method for switching a heat source to be operated during the water supply mode between the heat pump unit 20 and the boiler unit 30 with a flow chart of FIG.4.

At step S1, the acquiring means 98 acquires information indicating the electricity price and the fuel price from the price information delivery server 400 via the network 400a. The step S1 may be executed when the price information delivery server 400 sends the information indicating the electricity price and the fuel price.

At step S2, the calculation means 96 calculates BECOP from the information indicating the electricity price and the fuel price acquired by the acquiring means 98 and the boiler efficiency of the boiler unit 30 stored in the memory (not shown) of the controller 90. The step S2 may be executed when the information indicating the electricity price and the fuel price is changed. For example, the step S2 may be executed when the acquiring means 98 acquires information indicating the electricity price and the fuel price from the price information delivery server 400. If the information indicates different prices in accordance with time periods in a day, the step S2 may be executed when a time period starts.

At step S3, the ambient temperature sensor 50 detects the ambient temperature around the heat pump unit 20.

At step S4, the return medium temperature sensor 60 detects the temperature of the heating medium. Alternatively, the tank water temperature sensor 60a may detect the temperature of the water in the water tank 310.

At step S5, the calculation means 96 calculates the COP of the heat pump unit 20 from the ambient temperature around the heat pump unit 20. Preferably, the calculation means 96 calculates the COP of the heat pump unit 20 from the ambient temperature around the heat pump unit 20 and the temperature of the water in the water tank 310. The temperature detected by the return medium temperature sensor 60 or the tank water temperature sensor 60a is used as the water temperature to calculate the COP.

The COP of the heat pump unit 20 may be calculated from the current ambient temperature around the heat pump unit 20, and preferably further from the current temperature of the water in the water tank 310. More preferably, the COP of the heat pump unit 20 may be calculated from the average ambient temperature around the heat pump unit 20 during a predetermined period and the average temperature of the water in the water tank 310 during the predetermined period. When the average ambient temperature around the heat pump unit 20 and the average temperature of the water in the water tank 310 are used for calculating the COP of the heat pump unit 20, steps S3, S4 are executed a plurality of times in the predetermined period before executing step S5.

At step S6, the heat source control means 94 compares the ambient temperature (Ta) around the heat pump unit 20 with a lower threshold value (Tath1) and an upper threshold value (Tath2) of the ambient temperature. Preferably, the average ambient temperature (Ta) during the predetermined period is compared with the lower threshold value (Tath1) and the upper threshold value (Tath2). When the average ambient temperature around the heat pump unit 20 is used for comparison, step S3 is executed a plurality of times in the predetermined period before executing step S6. When the ambient temperature (Ta) is equal or higher than the lower threshold value (Tath1) and is equal or lower than the upper threshold value (Tath2), the flow proceeds to step S7. When the ambient temperature (Ta) is lower than the lower threshold value (Tath1) or is higher than the upper threshold value (Tath2), the heat source control means 94 sets the boiler unit 30 as a heat source to be operated.

At step S7, the heat source control means 94 compares the temperature of the water (Ttw) in the water tank 310 with an upper threshold value (Ttwth). Preferably, the average temperature (Ttw) of the water in the water tank 310 during the predetermined period is compared with the upper threshold value (Ttwth). When the average temperature of the water in the water tank 310 is used for comparison, step S4 is executed a plurality of times in the predetermined period before executing step S6. When the temperature of the water (Ttw) is equal or lower than the upper threshold value (Ttwth), the flow proceeds to step S8. When the temperature of the water (Ttw) is higher than the upper threshold value (Ttwth), the heat source control means 94 sets the boiler unit 30 as a heat source to be operated.

At step S7, the heat source control means 94 compares the COP of the heat pump unit 20 calculated in step S5 with BECOP. When the COP of the heat pump unit 20 is equal or higher than BECOP, the heat source control means 94 sets the heat pump unit 20 as a heat source to be operated. When the COP of the heat pump unit 20 is lower than BECOP, the heat source control means 94 sets the boiler unit 30 as a heat source to be operated.

Steps S3 to S8 may be executed repeatedly during operation of the apparatus 100 in the water supply mode. Preferably, steps S3 to S8 are executed at a predetermined interval of time period (e.g. every five minutes).

When the heat source control means 94 sets the heat pump unit 20 as a heat source to be operated, heat source control means 94 operates the heat pump unit 20 and sets the flow mode of the heating medium to the bypass mode by controlling the flow mode switching means 70.

When the heat source control means 94 sets the boiler unit 30 as a heat source to be operated, heat source control means 94 operates the boiler unit 30 and sets the flow mode of the heating medium to the boiler usage mode by controlling the flow mode switching means 70.

The method for switching a heat source to be operated during the water supply mode between the heat pump unit 20 and the boiler unit 30 is not limited to the above explanation, and various variations and modifications may be possible.

For example, the above mentioned order of the steps may be altered without departing from the purpose of the method explained above.

Although the method explained above takes the efficiency into consideration as explained in FIG.3b, it is possible to alter the method so as not to take the efficiency into consideration as explained in FIG.3a by skipping step S1, S2, S5, and S8 in FIG. 4.

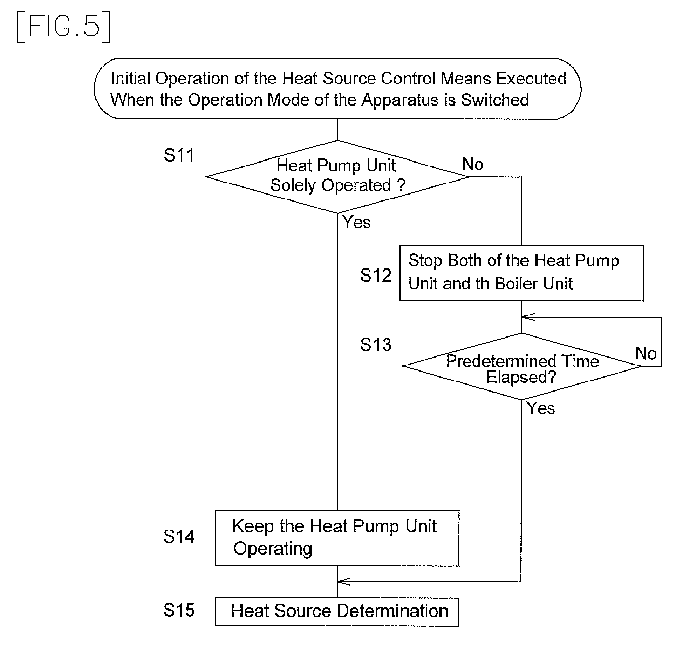

FIG. 5 shows the initial operation of the heat source control means 94 executed when the operation mode of the apparatus 100 is switched.

In a case where the apparatus 100 has been operated at either one of the space heating mode or the water supply mode and the operation mode means 92 switches the operation mode of the apparatus 100 to the other mode, the heat source control means 94 executes the initial operation as shown in FIG. 5.

At step S11, the heat source control means 94 determines whether the heat pump unit 20 was solely operated immediately before the operation mode of the apparatus 100 was switched. In other words, the heat source control means 94 determines whether the heat pump unit 20 was in operation and the boiler unit 30 was not in operation immediately before the operation mode of the apparatus 100 was switched. If yes, the operation step is advanced to step S14. If no, the operation step is advanced to step S12.

At step S12, the heat source control means 94 stops the heat pump unit 20 and the boiler unit 30. If the heat pump unit 20 and/or the boiler unit 30 have been already stopped, the heat source control means 94 keeps the heat pump unit 20 and/or the boiler unit 30 stopped. Then the operation step is advanced to step S13.

At step S13, the heat source control means 94 determines whether a predetermined period (e.g. a few minutes) of time has elapsed since step S12 was executed. Step S13 is repeated until it is determined yes. When it is determined that it has elapsed the predetermined period of time, the operation step is advanced to step S15.

In this embodiment, the operation step is advanced to step S15 based on the determination, in step S13, whether the predetermined period of time has elapsed since step S12 was executed. But, the operation step may be advanced to step S15 based on other factor such as the temperature detected by the return medium temperature sensor 60. For example, the operation step may be advanced to step S15 when the fluctuation of the temperature detected by the return medium temperature sensor 60 in a predetermined time is within a predetermined range.

At step S14, the heat source control means 94 keeps the heat pump unit 20 operating. Then the operation step is advanced to step S15.

At step S15, the heat source control means 94 determines the heat source to be operated.

During the water supply mode, the heat source control means 94 determines the heat source to be operated between the heat pump unit 20 and the boiler unit 30 in accordance with the flow chart shown in FIG.4.

During the space heating mode, the heat source control means 94 determines which of the heat pump unit 20, the boiler unit 30, or both of the heat pump unit 20 and the boiler unit 30 is/are to be operated as explained above. Preferably, the heat source control means 94 determines which of the heat pump unit 20, the boiler unit 30, or both of the heat pump unit 20 and the boiler unit 30 is/are to be operated further based on the temperature detected by the return medium temperature sensor 60. When the temperature detected by the return medium temperature sensor 60 is beyond the operable temperature of the refrigerant of the heat pump unit 20, the heat source control means 94 may determine to operate the boiler unit 30.

4. Variations

Variations of the above mentioned embodiments will be described below. Some or all of the variations can be combined except they are not contrary to each other.

(1) In the above embodiment, BECOP is calculated by the calculation means 96 using the equation below.

$$BECOP = \text{Electricity Price [price per kilo joule]} / \text{Fuel Price [price per kilo joule]} * \text{Boiler Efficiency}$$

However, BECOP may be calculated using the following equation if it is required to place higher importance on the ecological viewpoint than the economical viewpoint.

$$BECOP = \text{Primary Energy Factor} * \text{Boiler Efficiency}$$

Primary energy factor is defined as the ratio between end-user consumption of electricity and primary energy consumption.

(2) In the above embodiment, the heat source control means 94 determines whether the boiler unit 30 was operated immediately before the operation mode of the apparatus 100 was switched, and stops the heat pump unit 20 and the boiler unit 30 in accordance with the determination result.

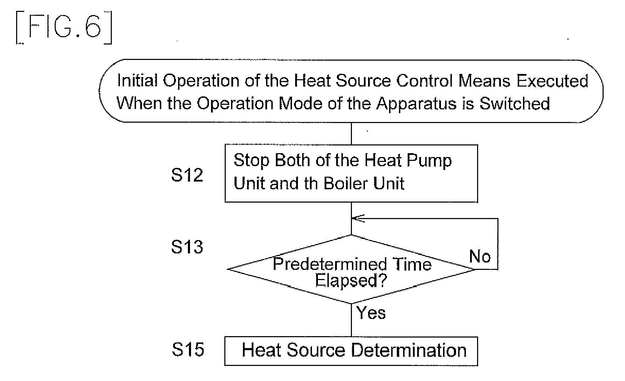

However, in another embodiment, as shown in FIG. 6, the heat source control means 94 may stop the heat pump unit 20 and the boiler unit 30 without determining whether the boiler unit 30 was operated immediately before the operation mode of the apparatus 100 was switched. In other words, the heat source control means 94 stops the heat pump unit 20 and the boiler unit 30 upon changes in the operation mode of the apparatus 100 while the heat pump unit 20 is in operation and the boiler unit 30 is not in operation. With this configuration, it is possible to prevent more securely the heat pump unit 20 from being operated when the temperature of the heating medium is beyond the operable temperature of a refrigerant of the heat pump unit 20.

(3) Preferably, the heat source control means 94 determines the heat source to be operated during the water supply mode as follows. The heat source control means 94 preferably uses the temperature detected by the return medium temperature sensor 60 as the temperature of the water in the water tank 310 at least when the operation mode of the apparatus 100 is switched from a space heating mode to the water supply mode. With this preferred embodiment, the heat pump unit 20 can be activated only when the heating medium flowing into the first heat exchanger 24 has an appropriate temperature for the heat pump unit 20. Accordingly, it is possible to avoid supplying too hot heating medium to the heat pump unit 20 in a more secure manner.

(4) The heat source control means 94 may stop the heat pump unit 20 and the boiler unit 30 for a sufficient period of time until the temperature of the heating medium is lowered to a temperature at which the heat pump unit 20 can operate. Thereby, the heat pump unit 20 can have more opportunity to be used as the heat source.

(5) In another embodiment, only in a case where the apparatus 100 has been operated at the space heating mode and the operation mode means 92 switches the operation mode of the apparatus 100 from the space heating mode to the water supply mode while the boiler unit 30 is in operation, the heat source control means 94 stops the heat pump unit 20 and the boiler unit 30.

**Claims**

1. An apparatus (100) configured to be connected to a space heating unit (200) and a water supply unit (300) with a water tank (310) so as to form a space heating circuit (250) and a water supply circuit (350) in which a heating medium is supplied to the space heating unit (200) and the water supply unit (300), respectively, comprising:

   a heat pump unit (20) configured to heat the heating medium;
   a boiler unit (30) configured to heat the heating medium;
   a circuit switching means (40) configured to switch a flow circuit of the heating medium between the space heating circuit (250) and the water supply circuit (350);
   an operation mode means (92) configured to switch an operation mode of the apparatus between a space heating mode and a water supply mode by controlling the circuit switching means (40) such that the space heating circuit (250) is activated during the space heating mode and the water supply circuit (350) is activated during the water supply mode; and
   a heat source control means (94) configured to stop the heat pump unit (20) and the boiler unit (30) upon changes in the operation mode of the apparatus while the boiler unit (30) is in operation.

2. The apparatus (100) according to claim 1, wherein
   The heat source control means (94) is further configured to stop the heat pump unit (20) and the boiler unit (30) during a predetermined period of time.

3. The apparatus (100) according to claim 1 or 2, wherein
   the heat source control means (94) is further configured to keep the heat pump unit (20) operating upon changes in the operation mode of the apparatus while the heat pump unit (20) is in operation and the boiler unit (30) is not in operation.

4. The apparatus (100) according to claim 1 or 2, wherein
   the heat source control means (94) is further configured to stop the heat pump unit (20) and the boiler unit (30) upon changes in the operation mode of the apparatus while the heat pump unit (20) is in operation and the boiler unit (30) is not in operation.

5. The apparatus (100) according to any one of claims 1 to 4, wherein
   the heat source control means (94) is further configured to stop the heat pump unit (20) and the boiler unit (30) upon changes in the operation mode of the apparatus from the space heating mode to the water supply mode while the boiler unit (30) is in operation.

6. The apparatus (100) according to any one of claims 1 to 5, wherein
   the space heating circuit (250) is provided with at least one flow control means (240) configured to control a flow rate of the heating medium flowing in the space heating circuit (250).

7. The apparatus (100) according to any one of claims 1 to 6, wherein
   the heat pump unit (20) includes a heat-pump-side heat exchange means (24) which is configured to exchange heat between the heating medium and a refrigerant circulating in the heat pump unit (20),

the boiler unit (30) includes a boiler-side heat exchange means (34) which is configured to heat the heating medium, and

the heat-pump-side heat exchange means (24) and the boiler-side heat exchange means (34) are connected in series in both of the space heating circuit (250) and the water supply circuit (350).

8. The apparatus (100) according to any one of claims 1 to 7, further comprising
a first detecting means (60) arranged at a location on or in a pipe (10) in which the heating medium is to flow, on the upstream side of the heat pump unit (20) and on the downstream side of both of the space heating unit (200) and the water supply unit (300) with respect to a flow direction of the heating medium, and configured to detect a first temperature of the heating medium,
wherein the heat source control means (94) is configured to operate the heat pump unit (20) based on the first temperature after the stoppage of the heat pump unit (20) and the boiler unit (30) upon changes in the operation mode of the apparatus while the boiler unit (30) is in operation.

9. The apparatus according to the claim 8, wherein
the heat source control means (94) is configured to determine which of the heat pump unit (20), the boiler unit (30), or both of the heat pump unit (20) and the boiler unit (30) is/are to be operated based on the operation mode of the apparatus and the first temperature after the stoppage of the heat pump unit (20) and the boiler unit (30) upon changes in the operation mode of the apparatus while the boiler unit (30) is in operation.

[FIG.1]

EP 3 252 383 A1

[FIG.2]

- 100
- 90 Controller
- 92 Operation Mode Means
- 94 Heat Source Control Means
- 96 Calculation Means
- 98 Acquiring Means
- 20 Heat Pump Unit
- 30 Boiler Unit
- 40 Circuit Switching Means
- 50 Ambient Temperature Sensor
- 60 Return Medium Temperature Sensor
- 60a Tank Water Temperature Sensor
- 70 Flow Condition Switching Means
- 80 Pump
- 400a
- 400 Price Information Delivery Server

[FIG.3a]

[FIG.3b]

[FIG.4]

[FIG.5]

Initial Operation of the Heat Source Control Means Executed
When the Operation Mode of the Apparatus is Switched

S11 — Heat Pump Unit Solely Operated ?

No → S12 — Stop Both of the Heat Pump Unit and th Boiler Unit

S13 — Predetermined Time Elapsed?

No

Yes

Yes → S14 — Keep the Heat Pump Unit Operating

S15 — Heat Source Determination

[FIG.6]

```
                   ┌─────────────────────────────────────────────┐
                   │ Initial Operation of the Heat Source Control │
                   │ Means Executed When the Operation Mode of    │
                   │ the Apparatus is Switched                    │
                   └─────────────────────────────────────────────┘
                                        │
          ┌──────────────────────────────────────────────┐
   S12    │ Stop Both of the Heat Pump Unit and th       │
          │ Boiler Unit                                   │
          └──────────────────────────────────────────────┘
                                        │
                                        ▼
   S13                   ◇ Predetermined Time Elapsed? ◇───── No
                                        │
                                      Yes
          ┌──────────────────────────────────────────────┐
   S15    │ Heat Source Determination                    │
          └──────────────────────────────────────────────┘
```

Europäisches
Patentamt

European
Patent Office

Office européen
des brevets

# EUROPEAN SEARCH REPORT

**Application Number**

EP 16 17 2092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 559 953 A1 (MITSUBISHI ELECTRIC CORP [JP]) 20 February 2013 (2013-02-20) * paragraphs [0023], [0024], [0026], [0031], [0054]; figure 1 * ----- | 1-9 | INV. F24D3/08 F24D3/18 F24D19/10 G05D23/19 G06Q10/06 G06Q50/06 |
| X | EP 2 159 495 A1 (HONEYWELL TECHNOLOGIES SARL [CH]) 3 March 2010 (2010-03-03) * paragraphs [0007], [0010] - [0015], [0017], [0018]; figures 1,2,4 * ----- | 1-9 | |
| A | GB 2 503 781 A (CLK CORP [KR]) 8 January 2014 (2014-01-08) * abstract; figure 1 * ----- | 1-9 | |

TECHNICAL FIELDS
SEARCHED (IPC)

F24D
G05D
G06Q
G05B

The present search report has been drawn up for all claims

| Place of search | Date of completion of the search | Examiner |
|---|---|---|
| Munich | 7 November 2016 | Degen, Marcello |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                           
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 2092

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2016

| Patent document cited in search report | | Publication date | Patent family member(s) | | Publication date |
|---|---|---|---|---|---|
| EP 2559953 | A1 | 20-02-2013 | CN 102893097 A | | 23-01-2013 |
| | | | EP 2559953 A1 | | 20-02-2013 |
| | | | JP 5389257 B2 | | 15-01-2014 |
| | | | US 2013025301 A1 | | 31-01-2013 |
| | | | WO 2011129248 A1 | | 20-10-2011 |
| EP 2159495 | A1 | 03-03-2010 | NONE | | |
| GB 2503781 | A | 08-01-2014 | GB 2503781 A | | 08-01-2014 |
| | | | KR 101255760 B1 | | 17-04-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2463591 A1